# EUROPEAN PATENT APPLICATION

(11) **EP 4 578 983 A1**
(43) Date of publication of application: **02.07.2025**
(21) Application number: 23856625.1
(22) Date of filing: 22.08.2023
(51) Int. Cl.: C22C 38/02, C22C 38/04, C22C 38/06, C22C 38/12, C22C 38/14, C21D 8/00

(54) **120-KG-GRADE COLD-ROLLED LOW-ALLOY ANNEALED DUAL-PHASE STEEL AND MANUFACTURING METHOD THEREFOR**

(30) Priority: 23.08.2022 CN 202211011576
(71) Applicant: BAOSHAN IRON & STEEL CO., LTD., Shanghai 201900 (CN)
(72) Inventor: LI, Wei, Shanghai 201900 (CN); ZHU, Xiaodong, Shanghai 201900 (CN)
(74) Representative: Kuhnen & Wacker Patent- und Rechtsanwaltsbüro PartG mbB
(86) International application number: PCT/CN2023/114269
(87) International publication number: WO 2024/041536

(57) **Abstract**

Disclosed in the present invention is a 120-kg-grade cold-rolled low-alloy annealed dual-phase steel, comprising Fe and inevitable impurities, and further comprising the following chemical elements in percentages by mass: 0.13% < C ≤ 0.15%, Si: 0.5-0.8%, Mn: 1.8-2.0%, Al: 0.01-0.03%, Nb: 0.015-0.025%, Ti: 0.015-0.025%, and B: 0.0020-0.0030%, wherein Mo and Cr are not included in the chemical elements. The microstructure of the 120-kg-grade cold-rolled low-alloy annealed dual-phase steel is martensite + ferrite. Accordingly, further disclosed in the present invention is a manufacturing method for the 120-kg-grade cold-rolled low-alloy annealed dual-phase steel. A 120-kg-grade cold-rolled low-alloy annealed dual-phase steel obtained by using the manufacturing method not only has good economical performance, but also has high strength, a good ratio of elongation and a good hole expansion rate.

## Description

### Technical Field

The present disclosure relates to a metal material and a manufacturing method thereof, in particular to a 120-kg grade cold-rolled low-alloy annealed dual-phase steel and a manufacturing method thereof.

### Background Art

In recent years, with the intensification of the global energy crisis and environmental problems, energy conservation and safety have become the main development direction of the automobile manufacturing industry, among which reducing vehicle weight is one of the important measures to save energy and reduce emissions. In the actual application process, due to the good mechanical properties and use properties of high-strength dual-phase steel, it can be effectively applied to the production and manufacturing of vehicle structural parts.

At present, with the development of ultra-high-strength steel and the changes in the current market, the market and users generally expect high-strength steel to have good economy and better performance. At present, 1180M Pa grade low-alloy steel is used in a small amount, but with the continuous development of the trend of weight reduction and energy saving in the automotive industry, and the rapid progress of the level of domestic and foreign steel mills, especially the domestic steel mills, the development of dual-phase steel in the future will inevitably be based on low-cost and high overall performance, which will further expand the types and quantities of 1180MPa grade low-alloy steel applications.

In the current prior art, researchers have conducted a lot of research on 1180MPa grade steel and have achieved certain research results.

For example, a Chinese patent document with a publication number of CN108193139A, a publication date of June 22, 2018, and a title of "1180MPa grade cold-rolled high-strength dual-phase steel for automobiles and production method thereof" discloses a 1180MPa grade cold-rolled high-strength dual-phase steel for automobiles and a production method thereof, wherein its chemical composition in weight percentages is as follows: C 0.10-0.13%, Si 0.45-0.68%, Mn 2.25-2.55%, P≤0.02%, S≤0.008%, Ti 0.10-0.14%, Cr 0.40-0.65%, Mo 0.17-0.21%, N≤0.0050%, Als 0.025-0.060%, with a balance of Fe and unavoidable impurities. The dual-phase steel designed in this technical solution uses elements such as C, Mn, Cr and Mo to improve the hardenability and strength of the strip steel, and at the same time, Ti is used for microalloying, the yield strength is improved by the fine grain strengthening effect, and the elongation is increased by Si. In this way, through reasonable composition design, it can maintain a good elongation while obtaining an ultra-high strength, and avoid the elongation reduction caused by too much Nb element. However, it is found that the dual-phase steel of this technical solution adopts higher Cr and Mo content in the chemical composition design, and its cost is higher.

Another example: a Chinese patent document with a publication number of CN109207847A, a publication date of January 15, 2019, and a title of "A low-carbon equivalent high-hole expansion ratio 1180MPa grade cold-rolled steel plate and manufacturing method thereof", discloses a low-carbon equivalent high-hole expansion ratio 1180MPa grade cold-rolled steel plate and its manufacturing method. The mass percentages of its chemical components are: C: 0.1%~0.15%, Si: 0.1%~0.4%, Mn: 1.5%~2.0%, Al: 0.01%~0.05%, Mo: 0.25~0.5%, Ti: 0.08~0.16%, with a balance of Fe and unavoidable impurities. Through the reasonable design of chemical composition and manufacturing process, the steel plate of this technical solution ensures that the tensile strength of the steel plate reaches 1180MPa under the condition of a low carbon equivalent, and the structure includes uniformly and diffusely distributed nanoscale precipitates to obtain high precipitation strengthening and excellent hole expansion ratio. However, the steel of this technical solution also adopts a high Mo content in the chemical composition design, and its cost is high.

Another example: a Chinese patent document with a publication number of CN109207841A, a publication date of January 15, 2019, and a title of "A low-cost and high-formability 1180MPa grade cold-rolled annealed dual-phase steel plate and manufacturing method thereof", discloses a low-cost and high-formability 1180MPa grade cold-rolled annealed dual-phase steel plate and its manufacturing method. The mass percentages of its chemical components are: C: 0.1%~0.125%, Si: 0.4%~0.8%, Mn: 2.6%~2.9%, Al: 0.01%~0.05%, Nb: 0.01 ~0.03%, Ti: 0.01~0.03%, with a balance of Fe and unavoidable impurities. Through the reasonable design of alloying elements and manufacturing process, the dual-phase steel plate of this technical solution ensures that the steel plate reaches 1180MPa strength under the premise of low cost; the fine and uniform martensite + ferrite dual phase structure is obtained to ensure excellent elongation and cold bending performance, and it has good formability. However, the high Mn content in the chemical composition design of this dual-phase steel is costly, and at the same time causes a severe banded structure and leads to non-uniformity of mechanical properties.

It can be seen that as to the existing patented technology of 1180MPa dual-phase steel, although some involve better forming properties, but most of them contain a high amount of alloys such as Cr, Mo, Mn, etc., which is not conducive to the weldability, surface quality and phosphating properties of steel, and will also lead to an increase in cost.

Therefore, in order to meet the current market demand, the present disclosure expects to develop a 120 kg grade cold-rolled low-alloy annealed dual-phase steel with both economy and excellent mechanical properties.

### Summary

One of the objects of the present disclosure is to provide a 120 kg grade cold-rolled low-alloy annealed dual-phase steel, wherein the 120 kg grade cold-rolled low-alloy annealed dual-phase steel has both economy and excellent mechanical properties, and it still has high strength and excellent elongation and hole expansion ratio under the premise of not adding Mo, Cr elements. It has a yield strength of ≥ 820Mpa, a tensile strength of ≥ 1200MPa, a gauge-length elongation at break A₅₀ of ≥8%, a hole expansion ratio λ of ≥45%, and has a very good promotion prospect and application value. In the present disclosure, 120 kg grade and 1180MPa grade refer to a tensile strength of steel ≥1180MPa, and 1200MPa grade refers to a tensile strength of steel ≥1200MPa.

In order to achieve the above purpose, the present disclosure provides a 120 kg grade cold-rolled low-alloy annealed dual-phase steel, which comprises Fe and unavoidable impurity elements, and also comprises the following chemical elements in mass percentages as follows:
0.13%<C≤0.15%, Si: 0.5%~0.8%, Mn: 1.8%~2.0%, Al: 0.01%~0.03%, Nb: 0.01~0.03%, Ti: 0.01~0.03%, B: 0.0020~0.0030%;
its chemical elements do not comprise Mo or Cr;
the microstructure of the 120 kg grade cold-rolled low-alloy annealed dual-phase steel is martensite + ferrite.

Further, in the 120 kg grade cold-rolled low-alloy annealed dual-phase steel described in the present disclosure, the mass percentage of each chemical element is:
0.13%< C≤0.15%, Si: 0.5%~0.8%, Mn: 1.8%~2.0%, Al: 0.01%~0.03%, Nb: 0.01~0.03%, Ti: 0.01~0.03%, B: 0.0020~0.0030%, with a balance of Fe and other unavoidable impurities.

In the present disclosure, the inventors adopt a C-Si-Mn based composition system to ensure that the obtained cold-rolled low-alloy annealed dual-phase steel can reach 1200MPa grade strength. In the chemical composition design, the dual-phase steel does not comprise precious alloying elements such as Mo and Cr, which can effectively ensure the economy. In addition, the present disclosure also adds and utilizes a trace amount of element B having high hardenability in the design of chemical composition, so as to play the effect of further reducing Mn content. In addition, trace amounts of Nb and Ti are added to the steel to inhibit the growth of austenite grains, so as to effectively refine the grains.

In the 120 kg grade cold-rolled low-alloy annealed dual-phase steel described in the present disclosure, the design principle of each chemical element is specifically described as follows:
C: in the 120 kg grade cold-rolled low-alloy annealed dual-phase steel described in the present disclosure, the addition of C element can improve the strength of the steel and improve the hardness of martensite. If the mass percentage of C in the steel is less than 0.13%, the strength of the steel plate will be affected, and it is not conducive to the formation of austenite in a desired amount and the stability thereof. When the mass percentage of C element in the steel is higher than 0.15%, it will cause an overly high martensite hardness and a coarse grain size, which are not conducive to the forming performance of the steel plate, and at the same time an overly high carbon equivalent, which is not conducive to welding. Therefore, in order to ensure the performance of the steel, in the 120 kg grade cold-rolled low-alloy annealed dual-phase steel described in the present disclosure, the mass percentage of C element is specifically controlled to be 0.13%< C ≤0.15%, for example, the mass percentage of C element can be 0.131%, 0.135%, 0.14%, 0.145%, 0.15% or within the range of any two values mentioned above.

Si: in the 120 kg grade cold-rolled low-alloy annealed dual-phase steel described in the present disclosure, the addition of Si element to the steel can improve the hardenability of the steel, and the solid dissolved Si in the steel can affect the interaction of dislocations, thereby increasing the work hardening rate, which can appropriately improve the elongation of the dual-phase steel, and is beneficial to better formability. However, it should be noted that the content of Si element in the steel should not be too high, and when the mass percentage of Si element in the steel is too high, it will not be conducive to the control of the surface quality of the steel plate. Therefore, in order to give full play to the beneficial effect of Si element, in the 120 kg grade cold-rolled low-alloy annealed dual-phase steel described in the present disclosure, the mass percentage of Si element is controlled to be 0.5%~0.8%, for example, the mass percentage of Si element can be 0.5%, 0.55%, 0.6%, 0.65%, 0.7%, 0.75%, 0.8% or within the range of any two values mentioned above.

Mn: in the 120 kg grade cold-rolled low-alloy annealed dual-phase steel described in the present disclosure, the addition of Mn element is not only conducive to improving the hardenability of the steel, but also can effectively improve the strength of the steel plate. When the mass percentage of Mn in the steel is less than 1.8%, the strength of the steel plate is insufficient. When the mass percentage of Mn in the steel is higher than 2.0%, the strength of the steel plate is too high, which will reduce its forming performance. Therefore, considering the beneficial effect of Mn element, in the 120 kg grade cold-rolled low-alloy annealed dual-phase steel described in the present disclosure, the mass percentage of Mn element is controlled to be 1.8%~2.0%, for example, the mass percentage of Mn element can be 1.8%, 1.83%, 1.85%, 1.88%, 1.9%, 1.93%, 1.95%, 1.98%, 2.0% or within the range of any two values mentioned above.

Al: in the 120 kg grade cold-rolled low-alloy annealed dual-phase steel described in the present disclosure, the addition of Al element can play the role of deoxidation and grain refinement. On the other hand, the lower the content of Al in the steel, the more conducive to the castability of smelting. Therefore, in order to give play to the beneficial effects of Al element, in the present disclosure, the mass percentage of Al element is controlled to be 0.01%~0.03%, for example, the mass percentage of Al element can be 0.01%, 0.015%, 0.02%, 0.025%, 0.03% or within the range of any two values mentioned above.

Nb: in the 120 kg grade cold-rolled low-alloy annealed dual-phase steel described in the present disclosure, Nb element is an important element for refining the grain. After adding a small amount of strong carbide-forming element Nb to the microalloy steel, in the process of controlled rolling, it can lead to a strain-induced precipitation phase to significantly reduce the recrystallization temperature of deformed austenite through particle pinning and subgrain boundaries, provide nucleation particles, and have a significant effect on grain refinement. In addition, in the process of continuous annealing austenitization, the soaking of insoluble carbide and nitride particles will prevent the coarsening of soaked austenite grains through the particle pinning grain boundary mechanism, so as to effectively refine the grains. Based on this, in order to give full play to the beneficial effect of Nb element, in the 120 kg grade cold-rolled low-alloy annealed dual-phase steel described in the present disclosure, the mass percentage of Nb element is specifically controlled to be 0.01~0.03%, for example, the mass percentage of Nb element can be 0.01%, 0.015%, 0.02%, 0.025%, 0.03% or within the range of any two values mentioned above.

Of course, in some preferred embodiments, in order to achieve better implementation effects, the mass percentage of Nb elements can be further preferably controlled to be 0.015~0.025%.

Ti: in the 120 kg grade cold-rolled low-alloy annealed dual-phase steel described in the present disclosure, the added strong carbide-forming element Ti also shows a strong effect of inhibiting the growth of austenite grains at high temperatures, and the addition of Ti elements also helps to refine the grains. Therefore, in order to exert the beneficial effect of Ti element, in the present disclosure, the mass percentage of Ti element is specifically controlled to be 0.01 ~0.03%, for example, the mass percentage of Ti element can be 0.01%, 0.015%, 0.02%, 0.025%, 0.03% or within the range of any two values mentioned above.

Of course, in some preferred embodiments, in order to achieve better implementation effects, the mass percentage of Ti element can be further preferably controlled to be 0.015~0.025%.

B: in the 120 kg grade cold-rolled low-alloy annealed dual-phase steel described in the present disclosure, the addition of B element is not only conducive to improving the hardenability of the steel, but also can effectively improve the strength of the steel plate. When the mass percentage of B element in the steel is less than 0.0020%, it will also cause an insufficient strength of the steel plate. When the mass percentage of B element in the steel is higher than 0.0030%, it will also lead to an excessively high strength of the steel plate and reduce its forming performance. Therefore, in the 120 kg grade cold-rolled low-alloy annealed dual-phase steel described in the present disclosure, the mass percentage of B element is controlled to be 0.0020~0.0030%, for example, the mass percentage of B element can be 0.0020%, 0.0023%, 0.0025%, 0.0028%, 0.0030% or within the range of any two values mentioned above.

In the above-mentioned component design, this cold-rolled low-alloy annealed dual-phase steel designed by the present disclosure is not added with precious alloying elements such as Mo, Cr, etc., and it has very excellent economy. At the same time, in order to ensure that the 1200 MPa grade tensile strength of dual-phase steel can be obtained at the normal continuous annealing gas cooling rate of 40-100 °C/s, the chemical composition design needs to ensure the alloy addition content of C, Mn and B to provide sufficient hardenability. However, it should be noted that the upper limit of the content of C, Mn and B alloying elements in the dual-phase steel also needs to be controlled to ensure excellent welding and forming properties, and to avoid the strength from exceeding the upper limit.

Further, in the 120 kg grade cold-rolled low-alloy annealed dual-phase steel described in the present disclosure, among the unavoidable impurities, P is ≤ 0.01%, S is ≤0.002%, N is ≤ 0.005%.

In the 120 kg grade cold-rolled low-alloy annealed dual-phase steel described in the present disclosure, P element, S element and N element are all impurity elements in the steel, and the lower the content of P, N and S elements in the steel, the better the implementation effect. Specifically, MnS formed by S element will seriously affect the formability of the steel, while the N element will easily cause cracks or bubbles on the surface of the slab. Therefore, if the technical conditions permit, in order to obtain the steel of better performance and better quality, the content of impurity elements in the steel should be reduced as much as possible, and P, S and N elements in the steel should be specifically controlled to be: P≤0.01 %, S≤0.002%, N ≤0.005%. In some embodiments, in the 120 kg grade cold-rolled low-alloy annealed dual-phase steel described in the present disclosure, the mass percentage of P element is 0.001~0.01%, and/or the mass percentage of S element is 0.001-0.002%, and/or the mass percentage of N element is 0.001~0.005%.

Further, in the 120 kg grade cold-rolled low-alloy annealed dual-phase steel described in the present disclosure, the mass percentage of each chemical element satisfies at least one of the following items:
Nb: 0.015~0.025%,
Ti: 0.015~0.025%.

Further, in the 120 kg grade cold-rolled low-alloy annealed dual-phase steel described in the present disclosure, the volume percentage of martensite is ≥ 75%, for example, the volume percentage of martensite can be 75%, 80%, 85%, 90%, 95%, 96%, 98% or within the range of any two values mentioned above.

Further, in the 120 kg grade cold-rolled low-alloy annealed dual-phase steel described in the present disclosure, its hardenability factor Y_{Q} satisfies: 2.2≤Y_{Q}≤2.6, wherein Y_{Q}=Mn+200×B, and each chemical element in the formula represents the numerical value before the mass percent sign. In some embodiments, the hardenability factor Y_{Q} is 2.2, 2.3, 2.4, 2.5, 2.6 or within the range of any two values mentioned above.

In this 120 kg grade cold-rolled low-alloy annealed dual-phase steel designed by the present disclosure, the combination effect of B element and Mn element can make the steel achieve a better strength effect. In order to make the final strength meet the requirements, the present disclosure can further control the mass percentage content of Mn and B to meet 2.2≤Y_{Q}≤2.6, wherein Y_{Q}=Mn+200×B, while controlling the mass percentage content of a single Mn element and a single B element.

However, it should be noted that in the alloy design, the Mn content is the maximum parameter that affects the overall cost, so the present disclosure uses the comprehensive hardenability of Mn-B, and by adding an appropriate amount of B, the alloy design amount of Mn can be further reduced, thereby helping to reduce the cost and improving the manufacturability of on-site production at the same time.

Further, in the 120 kg grade cold-rolled low-alloy annealed dual-phase steel described in the present disclosure, neither of the particle size of martensite and the particle size of ferrite is more than 5 microns. For example, the particle size of martensite can be 3 microns, 3.5 microns, 3.8 microns, 4 microns, 4.2 microns, 4.5 microns, 4.8 microns, 5 microns, or within the range of any two values mentioned above, and the particle size of ferrite can be 3 microns, 3.5 microns, 3.8 microns, 4 microns, 4.2 microns, 4.5 microns, 4.8 microns, 5 microns, or within the range of any two values mentioned above.

Further, in the 120 kg grade cold-rolled low-alloy annealed dual-phase steel described in the present disclosure, a large amount of carbide precipitate with a particle size of ≤0.2 µm is present inside the grain after tempering of martensite. In some embodiments, the particle size of carbide precipitate is 0.1 µm, 0.12 µm, 0.14 µm, 0.16 µm, 0.18 µm, 2 µm, or within the range of any two values mentioned above.

Further, in the 120 kg grade cold-rolled low-alloy annealed dual-phase steel described in the present disclosure, it is characterized in that it has a yield strength of ≥ 820MPa, a tensile strength of ≥ 1200MPa, a gauge-length elongation at break A₅₀ of ≥8%, and a hole expansion ratio λ of ≥45%. In some embodiments, the yield strength of the 120 kg grade cold-rolled low-alloy annealed dual-phase steel described in the present disclosure is 820MPa, 850MPa, 900MPa, 950MPa, 1000MPa or within the range of any two values mentioned above. In some embodiments, the tensile strength of the 120 kg grade cold-rolled low-alloy annealed dual-phase steel described in the present disclosure is 1200MPa, 1220MPa, 1250MPa, 1280MPa, 1300MPa, 1350MPa or within the range of any two values mentioned above. In some embodiments, the gauge-length elongation at break A₅₀ of the 120 kg grade cold-rolled low-alloy annealed dual-phase steel described in the present disclosure is 8%, 9%, 10%, 11%, 12%, 13% or within the range of any two values mentioned above. In some embodiments, the hole expansion ratio λ of the 120 kg grade cold-rolled low-alloy annealed dual-phase steel described in the present disclosure is 45%, 50%, 55%, 60%, 65%, 70% or within the range of any two values mentioned above.

Correspondingly, another object of the present disclosure is to provide the manufacturing method of the 120 kg grade cold-rolled low-alloy annealed dual-phase steel. The manufacturing method is convenient and simple to implement, and the 120 kg grade cold-rolled low-alloy annealed dual-phase steel prepared by the manufacturing method has high strength and excellent elongation and hole expansion ratio, wherein it has a yield strength of ≥ 820MPa, a tensile strength of ≥1200MPa, a gauge-length elongation at break A₅₀ of ≥8%, and a hole expansion ratio λ of ≥45%.

In order to achieve the above purpose, the present disclosure proposes a manufacturing method of the above-mentioned 120 kg grade cold-rolled low-alloy annealed dual-phase steel, which comprises steps:
(1) smelting and casting;
(2) hot rolling;
(3) cold rolling;
(4) annealing: the annealing soaking temperature is 825~855 °C, the annealing time is 40~200s, and then the steel plate is cooled to the starting temperature of quick cooling at a rate of 3~5 °C/s, and then quickly cooled at a rate of 40~100 °C/s, wherein the starting temperature of quick cooling is 735~760 °C, and the end temperature of quick cooling is 265~290 °C;
(5) tempering;
(6) temper rolling.

Further, in the manufacturing method described in the present disclosure, in step (4), the annealing soaking temperature is 830~840 °C.

In this technical solution designed by the present disclosure, in some preferred embodiments, in order to obtain a better implementation effect, i.e. the obtained grain size is fine, the mechanical properties of the obtained steel are moderate, and the forming performance is better, the annealing soaking temperature can be further preferably controlled to be 830-840 °C.

Further, in the manufacturing method of the present disclosure, in step (2), the continuously cast product is first heated to 1160~1190 °C, held for not less than 150 min, for example, 150~250 min, then final rolling of hot rolling is carried out at 850~890 °C, and quick cooling is carried out at a rate of 30~80 °C/s after rolling; then coiling is carried out at a coiling temperature of 500~540°C; after coiling, a thermal insulation cover is used for hot coil thermal insulation treatment, and the temperature in the thermal insulation cover is controlled to be 450~600 °C, and the steel coil is air-cooled to room temperature after the thermal insulation is completed.

In the above-mentioned technical solution of the present disclosure, the thermal insulation cover is adopted to carry out hot coil thermal insulation treatment, and the thermal insulation time can be specifically designed according to the demand. For example, in some embodiments, the thermal insulation time can be specifically controlled to be 1-4h.

Further, in the manufacturing method of the present disclosure, in step (3), the reduction rate of cold rolling is controlled to be 50~70%.

Further, in the manufacturing method described in the present disclosure, in step (5), the tempering temperature is controlled to be 265~290 °C, and the tempering time is 100~400s.

Further, in the manufacturing method of the present disclosure, in step (6), the reduction rate of temper rolling is controlled to be ≤ 0.3%, such as 0.1~0.3%.

Compared with the prior art, the 120 kg grade cold-rolled low-alloy annealed dual-phase steel and manufacturing method thereof of the present disclosure have the advantages and beneficial effects described below:
The present disclosure develops a new 120 kg grade cold-rolled low-alloy annealed dual-phase steel, which can obtain a steel plate with a tensile strength greater than 1200MPa and a martensite + ferrite dual phase structure without the addition of alloy elements of Mo, Cr, through rational chemical composition design and optimized manufacturing process. The 120 kg grade cold-rolled low-alloy annealed dual-phase steel has a fine and uniform martensite + ferrite dual phase structure, and a large amount of carbide precipitate with a particle size of ≤0.2µm is present inside the tempered martensite grains, and the final steel plate has excellent elongation, good stamping formability and flanging characteristics.

The 120 kg grade cold-rolled low-alloy annealed dual-phase steel designed and prepared by the present disclosure has good economy and at the same time has the characteristics of high strength and excellent elongation, hole expansion ratio. It has a yield strength of ≥ 820MPa, a tensile strength of ≥ 1200MPa, a gauge-length elongation at break A₅₀ of ≥8%, a hole expansion ratio λ of ≥45%. The 120 kg grade cold-rolled low-alloy annealed dual-phase steel is simple to produce and manufacture, and has a very good promotion prospect and application value, which can effectively meet the needs of the market and users.

### Description of the drawings

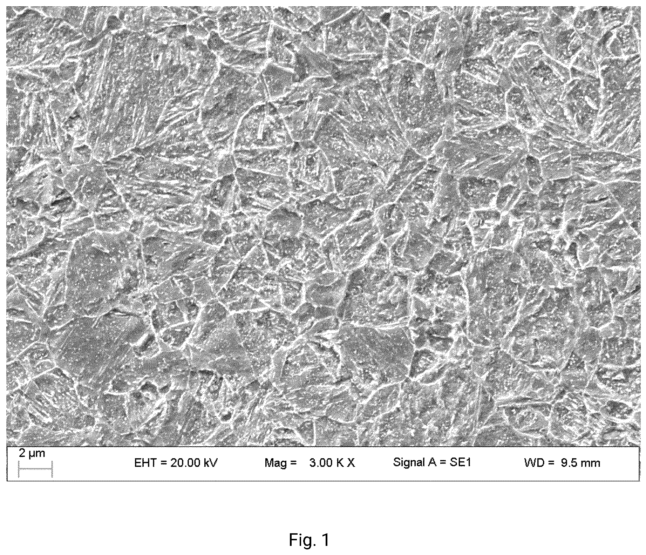

Figure 1 schematically shows the metallographic structure of the 120 kg grade cold-rolled low-alloy annealed dual-phase steel in Example 1 under a scanning electron microscope.

### Detailed Description

The 120 kg grade cold-rolled low-alloy annealed dual-phase steel and its manufacturing method will be further interpreted and explained below in conjunction with the drawings of the description and specific embodiments of the present disclosure, but the interpretation and explanation do not constitute an undue limitation to the technical solution of the present disclosure.

### Example 1-6 and Comparative Example 1-15

Table 1-1 lists the mass percentage of each chemical element designed for the 120 kg grade cold-rolled low-alloy annealed dual-phase steels of Example 1-6 and the comparative steels of Comparative Example 1-15.

**Table 1-1. (wt%, the balance is Fe and other unavoidable impurities except P, S and N)**

| No. | Chemical element | | | | | | | | | |
|---|---|---|---|---|---|---|---|---|---|---|
| | C | Si | Mn | B | Al | P | S | N | Nb | Ti |
| Example 1 | 0.133 | 0.55 | 1.84 | 0.0027 | 0.014 | 0.01 | 0.002 | 0.0044 | 0.019 | 0.020 |
| Example 2 | 0.145 | 0.74 | 1.88 | 0.0021 | 0.022 | 0.008 | 0.0016 | 0.0035 | 0.016 | 0.018 |
| Example 3 | 0.138 | 0.66 | 1.95 | 0.0025 | 0.013 | 0.009 | 0.0015 | 0.0042 | 0.015 | 0.022 |
| Example 4 | 0.141 | 0.54 | 1.92 | 0.0024 | 0.025 | 0.01 | 0.0019 | 0.0038 | 0.022 | 0.019 |
| Example 5 | 0.146 | 0.61 | 1.99 | 0.0026 | 0.019 | 0.007 | 0.002 | 0.0026 | 0.024 | 0.024 |
| Example 6 | 0.148 | 0.78 | 1.83 | 0.0022 | 0.024 | 0.001 | 0.0018 | 0.0028 | 0.028 | 0.029 |
| Comparative Example 1 | **0.125** | 0.76 | 1.86 | 0.0029 | 0.017 | 0.01 | 0.0017 | 0.0045 | 0.021 | 0.016 |
| Comparative Example 2 | **0.157** | 0.58 | 1.93 | 0.0022 | 0.026 | 0.007 | 0.002 | 0.0034 | 0.018 | 0.015 |
| Comparative Example 3 | 0.143 | 0.64 | **1.77** | 0.0023 | 0.011 | 0.008 | 0.002 | 0.0028 | 0.017 | 0.018 |
| Comparative Example 4 | 0.139 | 0.63 | **2.04** | 0.0028 | 0.012 | 0.009 | 0.0016 | 0.0032 | 0.02 | 0.022 |
| Comparative Example 5 | 0.132 | 0.59 | 1.82 | **0.0014** | 0.023 | 0.01 | 0.0015 | 0.0045 | 0.021 | 0.023 |
| Comparative Example 6 | 0.147 | **0.3** | 1.91 | **0.0036** | 0.015 | 0.01 | 0.0019 | 0.0035 | 0.016 | 0.019 |
| Comparative Example 7-15 | 0.135 | 0.78 | 1.96 | 0.0024 | 0.028 | 0.008 | 0.002 | 0.0044 | 0.018 | 0.024 |

Table 1-2 lists the values of the hardenability factor Y_{Q} of the 120 kg grade cold-rolled low-alloy annealed dual-phase steels of Example 1-6 and the comparative steels of Comparative Example 1-15.

**Table 1-2.**

| No. | Hardenability factor Y_{Q} |
|---|---|
| Example 1 | 2.38 |
| Example 2 | 2.3 |
| Example 3 | 2.45 |
| Example 4 | 2.4 |
| Example 5 | 2.51 |
| Example 6 | 2.27 |
| Comparative Example 1 | 2.44 |
| Comparative Example 2 | 2.37 |
| Comparative Example 3 | 2.23 |
| Comparative Example 4 | 2.6 |
| Comparative Example 5 | **2.1** |
| Comparative Example 6 | **2.63** |
| Comparative Example 7-15 | 2.44 |

| | |
|---|---|
| Note: in Table 1-2 above, Y_{Q}=Mn+200×B, and each chemical element in the formula represents the value before the mass percentage sign. | |

The 120 kg grade cold-rolled low-alloy annealed dual-phase steels of Example 1-6 of the present disclosure and the comparative steels of Comparative Example 1-15 were prepared by adopting the following steps:
(1) Smelting and casting were carried out according to the chemical composition design shown in Table 1-1 and Table 1-2, and the contents of S and P were reduced as much as possible to prepare a continuously cast product.
(2) Hot rolling: the continuously cast product was first heated to 1160~1190 °C, held for not less than 150min, and then final rolling of hot rolling was carried out at 850~890 °C, and quick cooling was carried out at a rate of 30~80 °C/s after rolling; then coiling was carried out, and the coiling temperature was controlled to be 500~540°C; after coiling, a thermal insulation cover was used for hot coil insulation treatment, wherein the temperature in the insulation cover was controlled to be 450~600 °C, the thermal insulation time could be 1-4h, the steel coil continued to be heated up or cooled down in the insulation cover, and the steel coil was air-cooled to room temperature after the thermal insulation was completed, and sent to the cold rolling mill.
(3) Cold rolling: the steel coil was cold rolled, and the reduction rate of cold rolling was controlled to be 50~70%.
(4) Annealing: the annealing soaking temperature was controlled to be 825~855 °C, which could also be preferably controlled to be 830~840 °C, the annealing time was controlled to be 40~200s, and then cooled to the starting temperature of quick cooling at a rate of 3~5 °C/s, and then quickly cooled at a rate of 40~100 °C/s, wherein the starting temperature of quick cooling was 735~760 °C, and the end temperature of quick cooling was 265~290 °C.
(5) Tempering: the tempering temperature was controlled to be 265~290°C, and the tempering time was 100~400s.
(6) Temper rolling: the reduction rate of temper rolling was controlled to be ≤ 0.3% to obtain the finished dual-phase steel.

In this technical solution designed by the present disclosure, the chemical composition design and related process of 120 kg grade cold-rolled low-alloy annealed dual-phase steels prepared above in Example 1-6 of the present disclosure meet the requirements of the design specification of the present disclosure.

Correspondingly, although the comparative steels in Comparative Example 1-15 also adopted the composition of Table 1-1 and Table 1-2 in combination with the above-mentioned process flow to prepare, in order to highlight the superiority of the technical solution of the present disclosure, the designed comparative steels in Comparative Example 1-15 had parameters that did not meet the design requirements of the present disclosure in the chemical composition and/or related manufacturing processes.

Specifically, the chemical composition of comparative steels in Comparative Example 1-6 had parameters that failed to meet the design requirements of the present disclosure; and the chemical composition of comparative steels in Comparative Example 7-15 satisfied the design requirements of the present disclosure, but the relevant process parameters all had the parameters that failed to meet the design specifications of the present disclosure.

Table 2-1 and Table 2-2 list the specific process parameters of the 120 kg grade cold-rolled low-alloy annealed dual-phase steels of Example 1-6 and the comparative steels in Comparative Example 1-15 in the above process steps (1)-(6).

**Table 2-1.**

| No. | Step (2) | | | | | | | Step (3) |
|---|---|---|---|---|---|---|---|---|
| | Heating temperature (°C) | Holding time (min) | Final temperature of hot rolling (°C) | Cooling rate (°C/s) | Coiling temperature (°C) | Thermal insulation temperature (°C) | Thermal insulation time (h) | Reduction rate of cold rolling (%) |
| Example 1 | 1178 | 155 | 855 | 45 | 520 | 510 | 2 | 55 |
| Example 2 | 1180 | 174 | 864 | 60 | 509 | 490 | 3 | 60 |
| Example 3 | 1169 | 200 | 890 | 78 | 534 | 565 | 4 | 68 |
| Example 4 | 1187 | 190 | 888 | 76 | 515 | 465 | 1 | 50 |
| Example 5 | 1171 | 185 | 860 | 46 | 526 | 500 | 2 | 58 |
| Example 6 | 1184 | 169 | 877 | 37 | 520 | 533 | 2 | 62 |
| Comparative Example 1 | 1175 | 195 | 885 | 72 | 538 | 525 | 2 | 65 |
| Comparative Example 2 | 1168 | 175 | 859 | 80 | **544** | 455 | 3 | 64 |
| Comparative Example 3 | 1190 | 166 | 874 | 50 | 540 | 540 | 1 | 63 |
| Comparative Example 4 | 1185 | 188 | 850 | 35 | 526 | 575 | 4 | 56 |
| Comparative Example 5 | 1168 | 195 | 879 | 42 | 535 | 505 | 4 | 52 |
| Comparative Example 6 | 1173 | 170 | 880 | 70 | 505 | 450 | 3 | 62 |
| Comparative Example 7 | **1155** | 164 | 875 | 45 | 536 | 530 | 2 | 58 |
| Comparative Example 8 | **1199** | 205 | 864 | 58 | 510 | 480 | 1 | 63 |
| Comparative Example 9 | 1183 | 184 | 866 | 55 | **484** | 545 | 4 | 64 |
| Comparative Example 10 | 1177 | 165 | 882 | 65 | **559** | 560 | 3 | 50 |
| Comparative Example 11 | 1180 | 170 | 866 | 65 | 540 | / | / | 58 |
| Comparative Example 12 | 1184 | 182 | 878 | 70 | 527 | 500 | 2 | 55 |
| Comparative Example 13 | 1176 | 190 | 870 | 75 | 506 | 490 | 1 | 66 |
| Comparative Example 14 | 1166 | 157 | 858 | 66 | 528 | 520 | 3 | 56 |
| Comparative Example 15 | 1172 | 160 | 869 | 55 | **545** | 580 | 4 | 60 |

**Table 2-2.**

| No. | Step (4) | | | | | | Step (5) | | Step (6) |
|---|---|---|---|---|---|---|---|---|---|
| | Annealing soaking temperature (°C) | Annealing time (s) | Cooling rate (°C/s) | Starting temperature of quick cooling (°C) | Cooling rate of quick cooling (°C/s) | End temperature of quick cooling (°C) | Tempering temperature (°C) | Tempering time (s) | Reduction rate of temper rolling (%) |
| Example 1 | 837 | 75 | 4 | 755 | 85 | 265 | 265 | 125 | 0.2 |
| Example 2 | 844 | 180 | 3 | 747 | 55 | 270 | 270 | 320 | 0.3 |
| Example 3 | 835 | 125 | 5 | 750 | 66 | 268 | 268 | 245 | 0.1 |
| Example 4 | 852 | 160 | 5 | 735 | 75 | 290 | 290 | 260 | 0.2 |
| Example 5 | 828 | 90 | 5 | 756 | 60 | 284 | 284 | 355 | 0.3 |
| Example 6 | 849 | 145 | 3 | 752 | 80 | 275 | 275 | 360 | 0.1 |
| Comparative Example 1 | 842 | 160 | 3 | 745 | 45 | 275 | 275 | 340 | 0.2 |
| Comparative Example 2 | 836 | 50 | 5 | 739 | 67 | 272 | 272 | 200 | 0.1 |
| Comparative Example 3 | 840 | 125 | 3 | 740 | 72 | 288 | 288 | 180 | 0.2 |
| Comparative Example 4 | 826 | 180 | 5 | 746 | 80 | 274 | 274 | 300 | 0.3 |
| Comparative Example 5 | 833 | 45 | 4 | 754 | 54 | 282 | 282 | 250 | 0.3 |
| Comparative Example 6 | 847 | 80 | 5 | 740 | 90 | 285 | 285 | 160 | 0.2 |
| Comparative Example 7 | 845 | 130 | 3 | 753 | 77 | 269 | 269 | 320 | 0.1 |
| Comparative Example 8 | 834 | 155 | 4 | 749 | 85 | 270 | 270 | 120 | 0.2 |
| Comparative Example 9 | 827 | 95 | 3 | 738 | 95 | 275 | 275 | 195 | 0.3 |
| Comparative Example 10 | 832 | 190 | 4 | 752 | 80 | 289 | 289 | 275 | 0.1 |
| Comparative Example 11 | 835 | 170 | 4 | 747 | 70 | 265 | 265 | 385 | 0.2 |
| Comparative Example 12 | **820** | 165 | 5 | 746 | 62 | 273 | 273 | 385 | 0.2 |
| Comparative Example 13 | **859** | 55 | 3 | 739 | 68 | 284 | 284 | 280 | 0.1 |
| Comparative Example 14 | 839 | 66 | 3 | 750 | 47 | **245** | **245** | 300 | 0.2 |
| Comparative Example 15 | 841 | 130 | 5 | 740 | 72 | **310** | **310** | 240 | 0.3 |

It should be noted that in the above table 2-2, the end temperature of quick cooling in each example and comparative example was the same as the tempering temperature, which was because, in the actual process operation, the tempering operation was carried out after the end of the quick cooling operation.

Correspondingly, after completing the above-mentioned manufacturing process, the inventors sampled the dual-phase steel of each example and comparative example for the finished dual-phase steels prepared in Example 1-6 and Comparative Example 1-15, respectively, so as to obtain the corresponding steel plate samples, and the microstructure of the steel plate sample of each example and comparative example was observed and analyzed by optical microscope, and it was observed that the microstructures of the 120-kg cold-rolled low-alloy annealed dual-phase steels of Example 1-6 and the comparative steel plates of Comparative Example 1-15 were martensite +ferrite.

It was observed that the martensite of the 120 kg grade cold-rolled low-alloy annealed dual-phase steels of Example 1-6 and the comparative steel plates of Comparative Example 1-15 had a large amount of carbide precipitate inside them after tempering.

To this end, the inventors further analyzed the microstructure of the steel plate of each example and comparative example to obtain the test results of the phase proportion of martensite, the particle size of martensite, the particle size of ferrite and the particle size of a large amount of carbide precipitate present inside the grains after tempering of the martensite in the microstructure of the steel plate of Example 1-6 and Comparative Example 1-15, and the relevant test results are specifically listed in Table 3 below. In the present disclosure, phase proportion refers to the proportion of each phase in the structure measured by the area method; particle size refers to the grain size of each structure, which is based on the average values of the transverse and longitudinal directions. The phase proportion and particle size were observed by an optical microscope, and the phase proportion and particle size were measured with the help of the analysis software that comes with the optical microscope.

**Table 3.**

| No. | Phase proportion of martensite (%) | Particle size of martensite (µm) | Particle size of ferrite (µm) | Particle size of carbide precipitate (µm) |
|---|---|---|---|---|
| Example 1 | 79 | 4.8 | 4.5 | 0.11 |
| Example 2 | 86 | 4.5 | 4.4 | 0.15 |
| Example 3 | 82 | 3.9 | 3.6 | 0.18 |
| Example 4 | 88 | 4.4 | 3.7 | 0.17 |
| Example 5 | 96 | 3.8 | 4.3 | 0.12 |
| Example 6 | 80 | 4.0 | 5.0 | 0.16 |
| Comparative Example 1 | **69** | **6.2** | **6.0** | **0.22** |
| Comparative Example 2 | 94 | 3.2 | 3.0 | 0.14 |
| Comparative Example 3 | **70** | **6.0** | **5.8** | **0.23** |
| Comparative Example 4 | 89 | 3.4 | 3.6 | 0.15 |
| Comparative Example 5 | **71** | **5.6** | **5.5** | **0.25** |
| Comparative Example 6 | 90 | 3.6 | 3.8 | 0.16 |
| Comparative Example 7 | **68** | **5.5** | **5.2** | **0.21** |
| Comparative Example 8 | 91 | 3.6 | 3.5 | 0.12 |
| Comparative Example 9 | 93 | 3.4 | 3.3 | 0.11 |
| Comparative Example 10 | **70** | 4.8 | 4.6 | 0.18 |
| Comparative Example 11 | 85 | 4.3 | 4.2 | 0.16 |
| Comparative Example 12 | **72** | **5.2** | 5.0 | 0.20 |
| Comparative Example 13 | 97 | 3.8 | 4.0 | 0.14 |
| Comparative Example 14 | 90 | 4.0 | 3.8 | 0.13 |
| Comparative Example 15 | **70** | **5.9** | **6.0** | **0.24** |

As can be seen from the above Table 3, in the present disclosure, the microstructure of the 120 kg grade cold-rolled low-alloy annealed dual-phase steels prepared in Example 1-6 was martensite + ferrite, and the volume percentage (phase proportion) of the martensite was between 79% and 96%, the particle size of martensite is between 3.8µm and 4.8µm, the particle size of ferrite was between 3.6µm and 5.0µm, and the particle size of carbide precipitate present inside the grains after tempering of martensite was between 0.11µm and 0.18µm.

Correspondingly, after completing the above observation and analysis, in order to verify the performance of steel in each example and comparative example, the 120-kg cold-rolled low-alloy annealed dual-phase steels prepared in Example 1-6 and the comparative steels prepared in Comparative Example 1-15 were sampled, and the corresponding steel plate samples were obtained. And the steel plate samples obtained in Example 1-6 and Comparative Example 1-15 were tested to obtain the mechanical property data of the steels in Example 1-6 and Comparative Example 1-15, and the relevant test results are listed in the following Table 4.

The relevant mechanical property test methods were as follows:
Tensile test: the GB/T228-2010 Metallic materials-Tensile testing-Method of test at ambient temperature was used to detect the yield strength, tensile strength and gauge-length elongation at break A₅₀ of the steels in Example 1-6 and Comparative Example 1-15. Among them, the gauge-length elongation at break A₅₀ represents: the elongation at break of the tensile specimen having parallel length * width of 50mm * 25mm.

Hole expansion ratio test: the GB/T 24524-2021 Metallic materials-Sheet and strip-Hole expanding test was used, and the corresponding hole expansion ratio value was the average of the values of the "edge", "middle" and "other edge" of the steel plate. The hole expansion ratio of the steels in Example 1-6 and Comparative Example 1-15 was detected and obtained.

Table 4 lists the mechanical property test results of the 120 kg grade cold-rolled low-alloy annealed dual-phase steels in Example 1-6 and the comparative steels in Comparative Example 1-15.

**Table 4.**

| No. | Yield strength (MPa) | tensile strength (MPa) | A₅₀ elongation at break (%) | Kilogram force (kg/cm²) | Hole expansion ratio (%) |
|---|---|---|---|---|---|
| Example 1 | 848 | 1245 | 10.5 | 125 | 50 |
| Example 2 | 905 | 1277 | 8.6 | 128 | 48 |
| Example 3 | 866 | 1254 | 9.9 | 125 | 55 |
| Example 4 | 927 | 1280 | 8.5 | 128 | 52 |
| Example 5 | 933 | 1288 | 8.8 | 129 | 60 |
| Example 6 | 895 | 1248 | 10.2 | 125 | 57 |
| Comparative Example 1 | 829 | **1170** | 12.2 | 117 | 64 |
| Comparative Example 2 | 964 | 1328 | **7.5** | 133 | **35** |
| Comparative Example 3 | 831 | **1168** | 12.0 | 117 | 66 |
| Comparative Example 4 | 988 | 1309 | **7.4** | 131 | **44** |
| Comparative Example 5 | 826 | **1176** | 12.7 | 118 | 60 |
| Comparative Example 6 | 944 | 1319 | **7.2** | 132 | **40** |
| Comparative Example 7 | **818** | **1166** | 12.3 | 117 | 68 |
| Comparative Example 8 | 951 | 1307 | **7.7** | 131 | 48 |
| Comparative Example 9 | 974 | 1320 | **6.9** | 132 | **44** |
| Comparative Example 10 | 823 | **1171** | 12.7 | 117 | 58 |
| Comparative Example 11 | 924 | **1248** | **7.8** | 125 | **43** |
| Comparative Example 12 | 820 | **1175** | 12.4 | 118 | 55 |
| Comparative Example 13 | 956 | 1324 | **7.1** | 132 | 45 |
| Comparative Example 14 | 983 | 1303 | **7.6** | 130 | **38** |
| Comparative Example 15 | 833 | **1169** | 12.5 | 117 | 65 |

| | | | | | |
|---|---|---|---|---|---|
| Note: Kilogram force, or kg force, is a common unit of force, and the SI unit of force is Newton. 1 kg force refers to the gravitational force (i.e. 9.8N) exerted on a 1 kg object. So 1 kgf = 9.8 Newtons. | | | | | |

It can be seen from Table 4 that in the present disclosure, the 120 kg grade cold-rolled low-alloy annealed dual-phase steels of Example 1-6 prepared by this technical solution designed by the present disclosure has quite excellent mechanical properties, and its yield strength is between 848MPa and 933MPa, its tensile strength is between 1245MPa and 1288MPa, and its gauge-length elongation at break A₅₀ is between 8.5% and 10.5%, and the hole expansion ratio is between 48% and 60%. The properties of the dual-phase steel of each example are very excellent, and the tensile strength of more than 1200MPa is obtained under the premise of not adding precious alloying elements such as Mo and Cr, and these steels are all 120 kg grade cold-rolled low-alloy annealed dual-phase steels, and have good elongation and hole expansion ratio at the same time.

It can be seen from Tables 1-1, 1-2, 2-1, 2-2, 3 and 4 that compared with the steel of Comparative Example 1-15, the chemical composition of the 120 kg grade cold-rolled low-alloy annealed dual-phase steels of Example 1-6 of the present disclosure falls within the scope of protection, and at the same time cooperates with the optimized process parameters, thereby obtaining a dual-phase steel with both low cost and high performance.

Compared with the 120 kg grade cold-rolled low-alloy annealed dual-phase steels of Example 1-6, the comprehensive performances of the comparative steels in Comparative Example 1-15 are obviously inferior because the comparative steels in Comparative Example 1-15 do not meet the parameters required by the present disclosure in the chemical composition design and/or related manufacturing process.

The present disclosure observed the microstructure of the dual-phase steel in Example 1 corroded by 4% nitric acid in alcohol by scanning electron microscope, and determined the volume fraction and size of martensite and ferrite by using an image analysis software, and the result is shown in Figure 1.

Figure 1 schematically shows the metallographic structure of the 120 kg grade cold-rolled low-alloy annealed dual-phase steel in Example 1 under a scanning electron microscope.

It can be seen from Figure 1 that in the embodiment of Example 1, the microstructure of the prepared 120 kg grade cold-rolled low-alloy annealed dual-phase steel includes martensite and ferrite, wherein the volume percentage of martensite exceeds 75%, and neither of the particle size of martensite and the particle size of ferrite is more than 5 microns, and a large amount of carbide precipitate with a particle size of ≤0.2 µm is present inside the grains after tempering of martensite.

It should be noted that the combination of various technical features in this case is not limited to the combination mode recorded in the claims of this case or the combination mode recorded in the specific embodiment, and all the technical features recorded in this case can be freely combined or combined in any way, unless there is a contradiction between them.

It should also be noted that the examples listed above are only specific examples of the present disclosure. Obviously, the present disclosure is not limited to the above examples, and similar changes or deformations made thereby are directly derived or easily associated by those skilled in the art from the contents disclosed in the present disclosure, and should belong to the scope of protection of the present disclosure.

## Claims

1. A 120 kg grade cold-rolled low-alloy annealed dual-phase steel, which comprises Fe and unavoidable impurity elements, wherein it further comprises the following chemical elements in mass percentages as follows:
0.13%<C≤0.15%, Si: 0.5%~0.8%, Mn: 1.8%~2.0%, Al: 0.01%~0.03%, Nb: 0.01~0.03%, Ti:
0.01~0.03%, B: 0.0020~0.0030%;
its chemical elements do not comprise Mo or Cr; and
the microstructure of the 120 kg grade cold-rolled low-alloy annealed dual-phase steel is martensite + ferrite.

2. The 120 kg grade cold-rolled low-alloy annealed dual-phase steel of claim 1, wherein the mass percentage of each chemical element is:
0.13%< C≤0.15%, Si: 0.5%~0.8%, Mn: 1.8%~2.0%, Al: 0.01%~0.03%, Nb: 0.01~0.03%, Ti:
0.01~0.03%, B: 0.0020~0.0030%, with a balance of Fe and other unavoidable impurities.

3. The 120 kg grade cold-rolled low-alloy annealed dual-phase steel of claim 1 or 2, wherein among the unavoidable impurities, P is ≤ 0.01%, S is ≤0.002%, N is ≤ 0.005%.

4. The 120 kg grade cold-rolled low-alloy annealed dual-phase steel of claim 1 or 2, wherein the mass percentage of each chemical element satisfies at least one of the following items:
Nb: 0.015~0.025%,
Ti: 0.015~0.025%.

5. The 120 kg grade cold-rolled low-alloy annealed dual-phase steel of claim 1 or 2, wherein the volume percentage of martensite is ≥ 75%.

6. The 120 kg grade cold-rolled low-alloy annealed dual-phase steel of claim 1 or 2, wherein the hardenability factor Y_{Q} satisfies: 2.2≤Y_{Q}≤2.6, wherein Y_{Q}=Mn+200×B, and each chemical element in the formula represents the numerical value before the mass percent sign.

7. The 120 kg grade cold-rolled low-alloy annealed dual-phase steel of claim 1 or 2, wherein neither of the particle size of martensite and the particle size of ferrite is more than 5 microns.

8. The 120 kg grade cold-rolled low-alloy annealed dual-phase steel of claim 1 or 2, wherein carbide precipitate with a particle size of ≤0.2 µm is present inside the grains after tempering of martensite.

9. The 120 kg grade cold-rolled low-alloy annealed dual-phase steel of claim 1 or 2, wherein it has a yield strength of ≥ 820Mpa, a tensile strength of ≥ 1200MPa, a gauge-length elongation at break A₅₀ of ≥8%, and a hole expansion ratio λ of ≥45%.

10. A manufacturing method of the 120 kg grade cold-rolled low-alloy annealed dual-phase steel of any one of claims 1-9, which comprises steps:
(1) smelting and casting;
(2) hot rolling: wherein a continuously cast product is first heated to 1160~1190 °C, held for not less than 150 min, then final rolling of hot rolling is carried out at 850~890 °C, and quick cooling is carried out at a rate of 30~80 °C/s after rolling; then coiling is carried out at a coiling temperature of 500~540°C; after coiling, a thermal insulation cover is used for hot coil thermal insulation treatment, and the temperature in the thermal insulation cover is controlled to be 450~600 °C, and the steel coil is air-cooled to room temperature after the thermal insulation is completed;
(3) cold rolling;
(4) annealing: wherein the annealing soaking temperature is 825~855 °C, the annealing time is 40~200s, and then the steel plate is cooled to the starting temperature of quick cooling at a rate of 3~5 °C/s, and then quickly cooled at a rate of 40~100 °C/s, wherein the starting temperature of quick cooling is 735~760 °C, and the end temperature of quick cooling is 265~290 °C;
(5) tempering;
(6) temper rolling.

11. The manufacturing method of claim 10, wherein in step (4), the annealing soaking temperature is 830~840 °C.

12. The manufacturing method of claim 10, wherein in step (3), the reduction rate of cold rolling is controlled to be 50~70%.

13. The manufacturing method of claim 10, wherein in step (5), the tempering temperature is controlled to be 265~290 °C, and the tempering time is 100~400s.

14. The manufacturing method of claim 10, wherein in step (6), the reduction rate of temper rolling is controlled to be ≤ 0.3%.
